# EUROPÄISCHE PATENTSCHRIFT

(11) **EP 4 148 927 B1**
(45) Veröffentlichungstag und Bekanntmachung des Hinweises auf die Patenterteilung: **22.01.2025**
(21) Anmeldenummer: 22193166.0
(22) Anmeldetag: 31.08.2022
(51) Int. Cl.: H02G 9/10

(54) **VERWENDUNG EINER GEHÄUSEVORRICHTUNG**
USE OF A HOUSING DEVICE
UTILISATION D'UN DISPOSITIF LOGEMENT

(30) Priorität: 10.09.2021 DE 102021123465
(43) Veröffentlichungstag der Anmeldung: 15.03.2023
(73) Patentinhaber: Hauff-Technik GmbH & Co. KG, 89568 Hermaringen (DE)
(72) Erfinder: SCHMID, Jörg, 89168 Niederstotzingen (DE); SCHEURING, Horst, 89542 Herbrechtingen (DE); KURZ, Ralf, 89537 Giengen (DE)
(74) Vertreter: König Szynka Tilmann von Renesse Patentanwälte Partnerschaft mbB München

(56) Entgegenhaltungen:
- WO-A1-2020/245613
- GB-A- 1 204 783
- JP-A- 2011 200 070
- US-A1- 2015 263 502

## Beschreibung

Die vorliegende Erfindung betrifft die Verwendung einer Gehäusevorrichtung, die einen Hüllkörper und einen Montagekörper aufweist.

Aus der WO 2020/245613 A1 ist ein vorgeformter Gehäuseblock aus Beton mit Adapterplatte aus Metall bekannt.

Aus der GB 1 204 783 A ist ein Fundamentsystem für Straßenlaternen bekannt.

Aus der US 2015/263502 A1 ist ein Unterflurgehäuse mit Diebstahlschutz bekannt. Bei diesem wird ein Deckel mittels einer Klammer an einem Gehäuse befestigt.

Aus der JP 2011 200070 A ist eine Energieversorgungssystem für eine Gartenbeleuchtung bekannt.

Der vorliegend in Rede stehende Hüllkörper begrenzt einen Innenraum, kann also bspw. eine Seiten- und eine Bodenwand aufweisen. Dieser Innenraum kann im Zuge der Verwendung zum Hindurchverlegen einer Medienleitung bzw. auch zum temporären Ablegen eines Leitungsendes bei einer Vormontage genutzt werden. Zur Illustration vorab, der Hüllkörper kann bei der Erschließung des Gartens bzw. der Außenanlagen eines Gebäudes genutzt werden, um z. B. später im Garten einen Stromanschluss bzw. Stromverbraucher platzieren zu können, etwa eine Leuchte. Der Hüllkörper lässt sich in einer frühen Phase der Bau- bzw. Gartenbauarbeiten außerhalb des Gebäudes platzieren und an das Gebäude anbinden, später stellt er einen gut zugänglichen Zugangspunkt dar.

Der vorliegenden Erfindung liegt das technische Problem zugrunde, eine vorteilhafte Verwendung einer Gehäusevorrichtung mit einem Hüllkörper anzugeben.

Dies wird erfindungsgemäß mit der Verwendung gemäß Anspruch 1 gelöst. Dabei ist ein Montageträger vorgesehen, der auf dem Hüllkörper vorgesehen ist oder wird und zur Befestigung eines Befestigungskörpers genutzt wird, bspw. eines Sockels bzw. Sockelteils, etwa für die Leuchte im Beispiel eingangs. Eine Besonderheit liegt dabei in der Ausgestaltung und Verwendung dieses Montageträgers, der einerseits aus einem Montageträgermaterial vorgesehen ist, welches Hartkunststoff ist. Andererseits wird der Befestigungskörper nicht in einer vorab exakt definierten (einzig möglichen) Montageposition am Montageträger befestigt, sondern wird das Loch für die Schraube zur Befestigung erst vor Ort eingebracht. Dies eröffnet Flexibilität, es lassen sich unterschiedliche Befestigungskörper an dem Montageträger montieren, diese können sich z. B. in ihrer Größe oder auch in ihrem Aufbau (Flansch innen oder außen etc.) unterscheiden.

Wenn das Loch "vor Ort" in den Montageträger eingebracht wird, kann bspw. der Hüllkörper in diesem Zeitpunkt bereits in den Boden eingebaut sein. Im Allgemeinen kann der Montageträger beim bzw. zum Einbringen des Lochs auch vom Hüllkörper abgenommen sein, bevorzugt ist er dabei jedoch am Hüllkörper angeordnet. Dort kann der Montageträger gut in Position gehalten sein, was bei den Bohr- bzw. Schraubarbeiten von Vorteil sein kann. Unabhängig von diesen Details lässt sich die Vor-Ort-Montage mit dem Befestigungsträger gut umsetzen, weil das mit bzw. aus Kunststoff vorgesehene Montageträgermaterial gut bearbeitbar ist, und generell kann der Kunststoff der eingedrehten Schraube auch einen guten Halt geben.

Bevorzugte Ausgestaltungen finden sich in der gesamten Offenbarung und insbesondere in den abhängigen Ansprüchen, wobei bei der Darstellung der Merkmale nicht immer im Einzelnen zwischen Verwendungs- bzw. Verfahrens- oder auch Vorrichtungsaspekten unterschieden wird; jedenfalls implizit ist die Offenbarung hinsichtlich sämtlicher Anspruchskategorien zu verstehen.

Der Hüllkörper ist bzw. wird "außerhalb des Gebäudes" in den Boden eingebaut, bspw. auf dem Grundstück des Gebäudes, aber nicht in dem Gebäude selbst. Der

Einbau in den Boden kann zumindest anteilig durch Umfüllen des Hüllkörpers mit Schüttgut erfolgen, bspw. mit Kies, Sand und/oder Oberboden (ein unterer Abschnitt des Hüllkörpers kann aber bspw. auch einbetoniert werden, siehe unten im Detail). Bezogen auf das Grundstück kann der Hüllkörper bspw. im Garten selbst platziert werden, etwa in einem bepflanzten Bereich (im Rasen oder bspw. auch einem Beet), oder auch an bzw. in einen Gartenweg oder eine anderweitig befestigte Fläche (z. B. Terrasse etc.) angrenzend vorgesehen oder integriert werden, er kann bspw. auch in der Einfahrt positioniert sein (bspw. außerhalb des Gartens, aber noch auf dem Grundstück).

Als "Gebäude" wird vorliegend ein allumseitig umbauter Raum betrachtet, insbesondere das Wohngebäude selbst, aber bspw. auch die Garage bzw. ein Nebengebäude. Die Anordnung "außerhalb des Gebäudes" soll jedoch im Allgemeinen eine Überdachung nicht ausschließen, bspw. eine Positionierung in einem Carport in der Einfahrt (bevorzugt kann jedoch gleichwohl eine Anordnung vollständig im Freien sein, also unter nach oben offen freiem Himmel). Unabhängig davon ist bzw. wird der Hüllkörper bevorzugt so in den Boden eingebaut, dass der darauf angeordnete Montageträger dann ohne Aufgraben von oben zugänglich ist, also bspw. im Wesentlichen bündig mit einer Oberkante des Bodenaufbaus liegt (um z. B. nicht mehr als 10 cm oder 5 cm nach oben oder unten versetzt).

Im Allgemeinen können der Hüllkörper und der Montageträger auch einstückig bzw. monolithisch miteinander ausgebildet sein, also aus demselben durchgehenden Material geformt sein. Bevorzugt lässt sich der Montageträger so vom Hüllkörper abheben bzw. -schwenken, dass dessen Innenraum dann gut zugänglich ist. Dies lässt sich im Falle der einstückigen/monolithischen Ausgestaltung mit bspw. einem über ein Filmscharnier schwenkbar am Hüllkörper angeordneten Montageträger umsetzen. Bevorzugt sind die beiden jedoch mehrstückig zueinander, sind bzw. werden sie also zusammengesetzt. In anderen Worten ist der Montageträger dann bspw. auf den Hüllkörper aufgesetzt, er kann oberhalb des Innenraums angeordnet sein und/oder sich auch nach unten in diesen hinein erstrecken. Bevorzugt bleibt dabei zumindest ein Teil des Innenraums frei, füllt der Montageträger diesen also nicht vollständig aus; ein verbleibender Hohlraum unterhalb des Montageträgers kann bspw. zur Leitungsverlegung (z. B. schleifenförmiges Ablegen) genutzt werden. Von oben kann dann der Befestigungskörper an den Montageträger angesetzt werden, bspw. auf eine dem Innenraum abgewandte, bevorzugt plane Oberseite des Montageträgers.

Erfindungsgemäß hat der Montageträger zumindest in einem Montagebereich eine in vertikaler Richtung genommene Dicke von mindestens 2 cm und höchstens 20 cm, wobei weitere mögliche Untergrenzen bei in der Reihenfolge der Nennung zunehmend bevorzugt mindestens 3 cm bzw. 5 cm liegen. Weitere mögliche Obergrenzen können bspw. bei höchstens 15 cm bzw. 12 cm liegen. Im Falle einer über den Montagebereich variierenden Dicke wird ein darüber gebildeter Mittelwert betrachtet, bevorzugt ist die Dicke über den Montagebereich jedoch konstant. Der Montagebereich kann, da er zum Anordnen unterschiedlicher Befestigungskörper ausgelegt ist, größer als der tatsächlich angesetzte Befestigungskörper sein. Er nimmt horizontal eine Fläche von mindestens 40 cm² und höchstens 1 m² ein (mit weiteren möglichen Obergrenzen bei z. B. höchstens 0,6 m², 0,4 m² bzw. 0,2 m²). Prinzipiell kann auch der gesamte Montageträger mit einer entsprechenden Dicke gefasst sein, er kann aber bspw. auch in Randbereichen etc. dünner ausgeführt sein.

Bei einer entsprechenden Mindestdicke kann das Loch bspw. als Sackloch ausgeführt sein, den Montageträger also nicht als Durchgangsloch durchsetzen, sondern darin enden. Damit kann der Montageträger bspw. trotz des Lochs als Abdeckung des Innenraums dienen. Zudem schafft die "dicke" Ausführung Stabilität, bspw. beim Einschrauben bzw. auch hinsichtlich einer Fundamentfunktion, etwa auch bezüglich der Stabilität des montierten Befestigungskörpers bzw. des weiteren Aufbaus allgemein (z. B. Leuchtenkörper etc.).

Erfindungsgemäß ist das Montageträgermaterial ein Hartkunststoff, bspw. PA, PE oder PC. Der "Hartkunststoff" kann bspw. eine Shore-Härte (D) von mindestens 50 Shore, 55 Shore, 60 Shore, 65 Shore bzw. 70 Shore haben, wobei mögliche Obergrenzen bspw. bei höchstens 90 Shore bzw. 85 Shore liegen können.

Gemäß einer bevorzugten Ausführungsform wird das Loch durch Bohren in den Montageträger eingebracht, also vor Ort gebohrt (z. B. bei bereits in den Boden eingebautem Hüllkörper). Bevorzugt werden sämtliche Löcher, die zur Montage des Befestigungskörpers mit Schrauben belegt werden, vor Ort gebohrt. Generell kann die Oberseite des Montageträgers bevorzugt plan ausgeführt sein, was auch bezüglich der Kompatibilität zu unterschiedlichen Befestigungskörpern von Vorteil sein kann.

Gemäß einer bevorzugten Ausführungsform wird in das Loch vor Ort (z. B. bei bereits in den Boden eingebautem Hüllkörper) ein Dübel eingesetzt und wird die Schraube in dem bzw. in den Dübel eingedreht. Der Dübel kann sich im Allgemeinen auch an einer der Oberseite des Montagekörpers entgegengesetzten Unterseite verspreizen, kann also bspw. als Kippdübel (z. B. Federklappdübel) oder Hohlraum- bzw. Spreizdübel ausgeführt sein und in ein Durchgangsloch in dem Montageträger gesetzt werden. Bevorzugt verspreizt sich der Dübel jedoch zumindest auch an einer das Loch begrenzenden Mantelfläche, bevorzugt wird er in ein Sackloch eingesetzt (siehe oben). Der Dübel kann bspw. als Kunststoff-Spreizdübel ausgeführt sein, bspw. einen im Verhältnis zum Außendurchmesser der Schraube kleineren Innendurchmesser haben und beim Eindrehen der Schraube gegen die das Loch begrenzende Mantelfläche gepresst werden.

Die Verwendung eines Dübels kann im Vergleich zu einem direkten Eindrehen der Schraube, das im Allgemeinen auch möglich ist, bspw. auch dahingehend von Vorteil sein, dass sich damit ein standardmäßig mit dem Befestigungskörper geliefertes Befestigungsset, das bspw. auf eine Montage an einem Betonsockel gerichtet sein kann, verwenden lässt. Damit können insbesondere auch die herstellerseitig dem Befestigungskörper, also bspw. Leuchtenfuß, beigelegten Schrauben verwendet werden, sodass bspw. keine Probleme bezüglich unterschiedlicher Korrosionsbeständigkeit von Schraube und Befestigungskörper geschaffen werden.

Generell kann der Montageträger bevorzugt einen Deckel bilden, also den Innenraum nach oben abdecken, etwa von einem Durchlass für Leitungen etc. abgesehen. Ein solcher Durchlass kann vorkonfektioniert, also bereits werksseitig vorgesehen sein, kann aber andererseits auch erst vor Ort eingebracht werden. Im Falle der Vorkonfektionierung kann bspw. ein Stopfen, z. B. aus einem Elastomermaterial, den Durchlass verschließen, bis dieser zur Leitungsverlegung genutzt wird.

Im Allgemeinen kann der Montageträger auf dem Hüllkörper auch lediglich aufliegen, also bspw. allein aufgrund seines Gewichts und/oder einer Umfüllung mit Schüttgut bzw. einer Einbettung in einen Oberflächenbelag (Pflastersteine etc.) in Position gehalten sein. Gemäß einer bevorzugten Ausführungsform ist er jedoch am Hüllkörper befestigt, bspw. kann ein Klemmring mit Kragen aufeinanderliegende Flansche von Hüllkörper und Montageträger umschließen und vertikal zusammenhalten. Alternativ oder zusätzlich kann der Montageträger auch mit dem Hüllkörper verschraubt sein. Der Montageträger kann bspw. an seinem Außenumfang einen nach unten gerichteten Kragen aufweisen, mit welchem er den Hüllkörper übergreift. Durch diesen Kragen kann eine Schraube bzw. können umlaufend verteilt mehrere Schrauben eingebracht sein und den Montageträger am Hüllkörper halten. Besonders vorteilhaft kann eine Ausgestaltung dahingehend sein, dass eine solche Schraube dann von außen nach innen zunächst den Kragen des Montageträgers und dann den Hüllkörper durchsetzt, um innerhalb davon in einen inneren Abschnitt des Montageträgers einzudringen, was Stabilität schafft.

Eine bevorzugte Ausführungsform betrifft den Einbau des Hüllkörpers in den Boden, ist nämlich ein unterer Abschnitt davon mit Beton umfüllt. Der Beton kann den Hüllkörper zwar im Allgemeinen auch über seine gesamte Höhe umschließen, bevorzugt ist jedoch ein oberer Abschnitt frei davon, ist dort also kein Beton, sondern bspw. Schüttgut oder ein Oberflächenbelag angeordnet. Das (teilweise) Einbetonieren kann Stabilität schaffen, auch mit Blick auf die spätere Sockelfunktion; andererseits kann das Freilassen des oberen Abschnitts bspw. noch einen Austausch des Montageträgers oder auch ein bündiges Anarbeiten der Oberkante des Bodens an den Montageträger erlauben (bspw. des Oberbodens oder eines Bodenbelags).

Im Allgemeinen kann der Hüllkörper bspw. auch rohrförmig vorgesehen sein, also oben und unten offen sein, etwa in Form eines Ripprohrs. Bevorzugt hat er jedoch eine Topfform, hat er also zusätzlich zur Seitenwand auch eine Bodenwand, die den Innenraum nach unten begrenzt. An den Hüllkörper wird bzw. ist bevorzugt ein im Boden verlegtes Schutzrohr angeschlossen. Dieses mündet in den Innenraum des Hüllkörpers und kann insbesondere das nachträgliche Verlegen einer Leitung vereinfachen. Dieses Schutzrohr kann an den Hüllkörper über dessen Seitenwand angebunden sein, also bspw. im Wesentlichen horizontal in den Hüllkörper laufen. Bei einer alternativ bevorzugten Ausführungsform ist es an der Bodenwand des Hüllkörpers angeordnet, bspw. in eine Aufnahmeöffnung in der Bodenwand eingeschoben. Solche Hüllkörper sind an sich als Bodendurchführungen bekannt, werden also in die Bodenplatte eines Gebäudes eingegossen.

Bevorzugt ist der gebäudeaußenseitige Hüllkörper mit dem Montageträger über das Schutzrohr an eine in das Gebäude verbaute Durchführung angebunden, bei der es sich insbesondere um eine Bodendurchführung handeln kann. Bevorzugt sind dann der gebäudeaußenseitige Hüllkörper und diese Bodendurchführung baugleich zueinander, werden also baugleiche Teile in ganz unterschiedlicher Anwendung genutzt (was bspw. hinsichtlich einer Vereinheitlichung in der Fertigung bzw. Auslastung der Werkzeuge von Vorteil sein kann). Das Schutzrohr kann sich zwischen der Gebäudedurchführung (insbesondere Bodendurchführung) und dem Hüllkörper bspw. über mindestens 1 m, 2 m oder 3 m erstrecken, mögliche Obergrenzen können bspw. bei höchstens 30 m, 25 m bzw. 20 m liegen.

Als Hüllkörper kann bspw. auch eine sogenannte Straßenkappe genutzt werden, die ansonsten im Straßenbereich verbaut, nämlich in die Deckschicht eingelassen wird und z. B. einen Zugang zu einem Drehschieber freihält. Eine solche Straßenkappe kann insbesondere teleskopierbar ausgeführt sein, also ein Unterteil und ein daran in seiner vertikalen Höhe versetzbar geführtes Oberteil aufweisen. Als Hüllkörper im vorliegenden Sinn kann dann bspw. auch allein das Unterteil genutzt werden, wobei das Oberteil durch den Montageträger ersetzt wird. Eine Straßenkappe kann aber auch unabhängig von der Teleskopierbarkeit (und dem vollständigen Ersetzen des Oberteils) genutzt werden, eine obere Öffnung der Straßenkappe ist nämlich immer mit einem Deckel verschlossen. Dieser Deckel kann den Montageträger im vorliegenden Sinn bilden bzw. durch einen entsprechenden Montageträger ersetzt werden.

Gemäß einer bevorzugten Ausführungsform wird durch den Hüllkörper eine Medienleitung verlegt und trägt der Befestigungskörper einen Medienverbraucher oder -verbraucheranschluss, an den die Medienleitung angeschlossen wird. Im Allgemeinen kann das Medium bspw. auch Wasser oder Daten sein, kann über den Befestigungskörper also bspw. ein Wasseranschluss oder -verbraucher (z. B. eine Gartendusche) montiert werden, oder kann bspw. ein Funk-, insbesondere WLAN-Modul an dem Montageträger montiert und über eine Datenleitung angeschlossen sein.

Bevorzugt ist das Medium jedoch Elektro, ist die Medienleitung also eine Stromleitung. Der Medienverbraucheranschluss kann insofern z. B. eine Gartensteckdose, z. B. zum bedarfsweisen Einstecken von elektrischem Gartenwerkzeug, oder auch eine Ladestation sein. Über die Ladestation lässt sich ein elektrischer Verbraucher laden, etwa ein Mähroboter oder insbesondere auch ein elektrisches Fahrzeug, wie z. B. ein Pkw oder auch Motorrad etc. Ebenso kann auch ein Stromverbraucher direkt an dem Montageträger befestigt sein bzw. werden, bspw. eine Leuchte oder auch eine Wärmepumpe. Unabhängig von dem Verbraucher/Verbraucheranschluss im Einzelnen kann der Hüllkörper mit dem Innenraum bspw. die Leitungsverlegung vereinfachen, etwa ein Ablegen von Überlängen erlauben. Andererseits schafft der Montageträger Stabilität, kann das Gesamtsystem aus Hüllkörper und Montageträger dann also zugleich als Sockel dienen.

Gemäß einer bevorzugten Ausführungsform wird bzw. ist die Medienleitung, die gebäudeaußenseitig an den vom Befestigungskörper getragenen Verbraucheranschluss angeschlossen ist, gebäudeinnenseitig mit einem verbraucherseitigen Ende des entsprechenden Medienhausanschlusses verbunden. Der Medienhausanschluss kann bspw. eine Gebäudeeinführung umfassen, etwa eine Bodendurchführung (siehe oben), daran kann in Richtung des verbraucherseitigen Endes bspw. ein Zähler anschließen. Im Falle der Stromleitung kann deren gebäudeinnenseitiges Ende bspw. über einen Sicherungskasten an den Hausanschluss angeschlossen sein.

Offenbart sein soll ferner eine Variante, die sich nicht in den erteilten Ansprüchen findet, bei welcher sich die Einbau- und Befestigungs- bzw. Anschlussschritte in eine Vor- und eine später darauffolgende Endmontage gliedern. Im Zuge der Vormontage wird der Hüllkörper in den Boden eingebaut, bevorzugt wird zudem ein Schutzrohr zwischen Hüllkörper und Gebäude verlegt, also der Innenraum des Hüllkörpers über das Schutzrohr an das Gebäude angebunden. Hierbei ist bzw. wird jedenfalls danach der Innenraum des Hüllkörpers verschlossen, also nach oben hin verdeckt. Den entsprechenden Verschluss kann bereits der Montageträger selbst bilden, es kann aber andererseits auch ein Deckel vorgesehen sein, der dann später durch den Montageträger ergänzt oder insbesondere ersetzt wird.

Zwischen der Vor- und einer Endmontage ist der Innenraum jedenfalls verschlossen, und er wird dann im Zuge der Endmontage geöffnet. Dies kann bspw. das Verlegen der Medienleitung vereinfachen, etwa wenn diese in das Schutzrohr eingeschoben wird, oder auch bezüglich möglicher Anschlussarbeiten von Vorteil sein, etwa wenn eine entsprechende Anschlussstelle dann im Innenraum des Hüllkörpers liegen soll. Nach der Endmontage, also dem Anschrauben des Befestigungskörpers und Anschließen des Verbrauchers/Verbraucheranschlusses, ist der Innenraum bevorzugt wieder nach oben verschlossen, besonders bevorzugt vom Montageträger selbst.

In bevorzugter Ausgestaltung weist der Montageträger eine Ausnehmung auf, wobei der angesetzte Befestigungskörper dann zumindest anteilig in dieser Ausnehmung angeordnet ist, was bspw. Stabilität schafft. Infolge dieser Anordnung kann bspw. eine horizontale Ebene sowohl den Montageträger als auch den Befestigungskörper schneiden. Der Befestigungskörper kann dabei auch vollständig in der Ausnehmung aufgenommen sein, kann also bspw. ein bodenversenktes Gehäuse eines Funkmoduls (insbesondere WLAN-Moduls) oder einer Bodenleuchte bilden.

Bei einer zur vollständigen Versenkung alternativen Ausführungsform ist auf dem Montageträger eine Säule befestigt, die sich gegenüber dem Montageträger vertikal um mindestens 25 cm erhebt, weiter und besonders bevorzugt mindestens 40 cm bzw. 50 cm (mögliche Obergrenzen können bspw. bei höchstens 2 m bzw. 1,5 m liegen). Es kann entweder der Befestigungskörper selbst diese Säule bilden, er kann aber andererseits auch nur einen Sockel davon darstellen, der dann die eigentliche Säule trägt.

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können.

Im Einzelnen zeigt
- Figur 1: eine in den Boden eingebaute Gehäusevorrichtung mit einem darauf befestigten Befestigungskörper, nämlich einem Sockel einer Leuchte;
- Figur 2: eine Übersichtsdarstellung zur Einbausituation mit einem Gebäude und gebäudeaußenseitigen Hüllkörpern;
- Figur 3: eine zu Figur 1 alternative Kombination aus Hüllkörper und Montageträger;
- Figur 4: einen alternativen Montageträger für die Anordnung gemäß Figur 3, der zusätzlich mit einer Ausnehmung versehen ist.

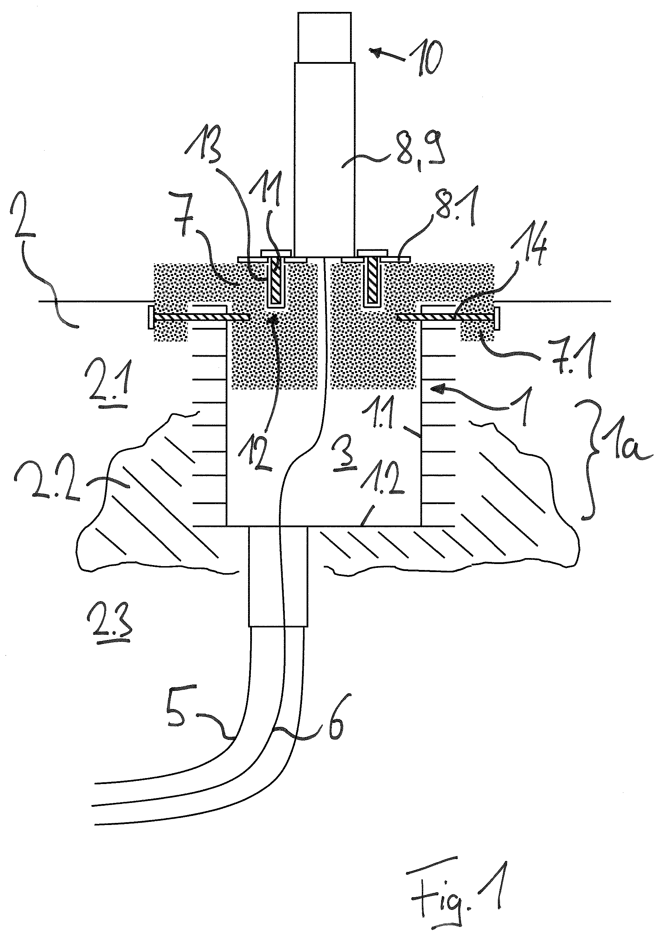

**Figur 1** zeigt einen Hüllkörper 1, der in einen Boden 2 eingebaut ist. Der Hüllkörper 1 weist eine Seitenwand 1.1 und eine Bodenwand 1.2 auf und begrenzt einen Innenraum 3. Durch die Bodenwand 1.2 mündet ein im Boden 2 verlegtes Schutzrohr 5 in den Innenraum 3, das dem Verlegen einer Medienleitung 6 dient. Auf den Hüllkörper 1 ist ein Montageträger 7 aufgesetzt, der seinerseits einen Befestigungskörper 8 trägt. Bei dem Befestigungskörper 8 handelt es sich vorliegend um eine Säule 9, die an ihrem oberen Ende eine Leuchte 10 trägt.

Der Befestigungskörper 8 weist einen Flansch 8.1 auf, über diesen ist er mit Schrauben 11 an dem Montageträger 7 befestigt. Die Schrauben 11 sitzen jeweils in einem Loch 12 des Montageträgers 7, wobei zusätzlich jeweils ein Dübel 13 in das jeweilige Loch 12 eingesetzt ist. Der Montageträger 7 ist aus Polymerbeton vorgesehen, und die Löcher 12 werden erst vor Ort eingebohrt, also im Zuge der Installation des Befestigungskörpers 8. Dies eröffnet Flexibilität, es lassen sich z. B. je nach Bedarf unterschiedlich große Befestigungskörper 8 auf dem Montageträger 7 befestigen bzw. Montageträger unterschiedlicher Hersteller.

Der Boden 2 ist vorliegend in einem oberen Bereich aus Schüttgut 2.1 aufgebaut, ein unterer Abschnitt 1a des Hüllkörpers 1 wird von Beton 2.2 umschlossen. Dies schafft Stabilität, der Hüllkörper 1 mit dem Montageträger 7 dient auch als Fundament. Ein unterer Bereich des Bodens 2 ist aus verdichtetem Schotter 2.3 aufgebaut, darin ist das Schutzrohr 5 verlegt. Außenseitig ist der Hüllkörper 1 mit Rippen gefasst, was den Halt im Boden 2 erhöht, insbesondere im Beton 2.2. Für eine stabile Fixierung ist ferner der Montageträger 7 mit dem Hüllkörper 1 verschraubt, sind nämlich seitlich Schrauben 14 in einen Kragen 7.1 des Montageträgers 7 eingebracht.

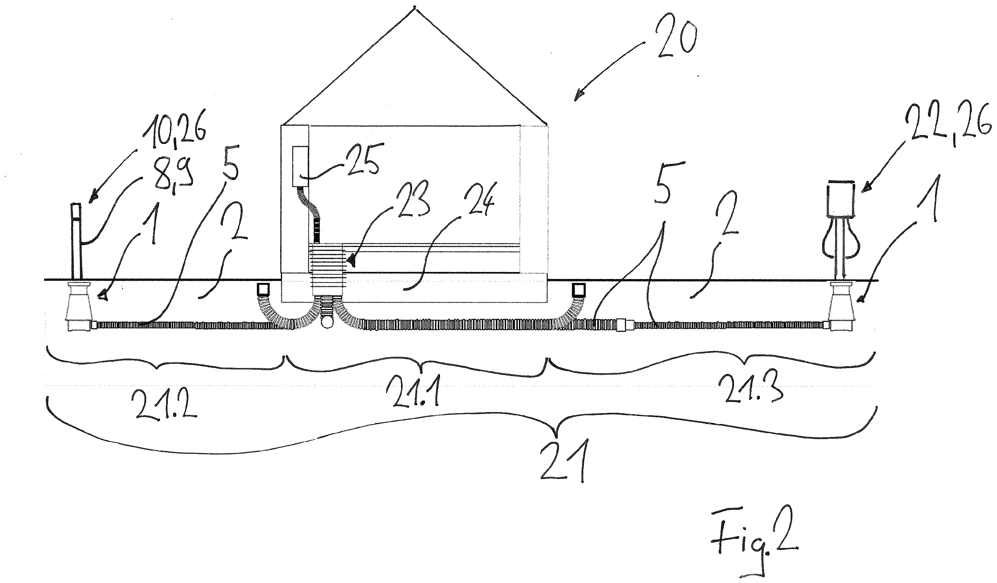

**Figur 2** zeigt eine Übersichtsdarstellung mit einem Gebäude 20, wobei mehrere Hüllkörper 1 außerhalb des Gebäudes 20, dabei aber noch auf dem Grundstück 21 platziert sind, also im Garten bzw. in einer Einfahrt oder an/in einem Weg etc. Auf beiden Hüllkörpern 1 ist jeweils ein Befestigungskörper 8 montiert, der in dem Beispiel links die Leuchte 10 und in dem Beispiel rechts eine Ladestation 22 für Elektrofahrzeuge trägt. Das Bezugszeichen 21.1 referenziert die Gebäudegrundfläche, die Bezugszeichen 21.2 und 21.3 den Garten und die Einfahrt. Die Hüllkörper 1 sind jeweils in den Boden 2 eingebaut, der bspw. im Falle des Gartens 21.2 aus Untergrund, einer Kiesschicht mit Mutterboden darauf aufgebaut sein kann, im Falle der Einfahrt 21.3 hingegen bspw. aus Untergrund, gegebenenfalls Frostschutzkies, Tragschicht(en), Bettung und Belag, etwa Pflasterbelag.

Im Boden 2 verläuft von dem Gebäude 20 zu jedem der Hüllkörper 1 ein jeweiliges Schutzrohr 5, in dem eine jeweilige Medienleitung (hier nicht dargestellt) verlegt ist, vorliegend also jeweils ein Stromkabel. Die Schutzrohre 5 sind an eine Hausausführung 23 angeschlossen, nämlich eine topfförmige, in die Bodenplatte 24 des Gebäudes 20 einbetonierte Durchführung. Das bzw. die Stromkabel sind an einen Sicherungskasten 25 angeschlossen, von dort laufen sie über die Hausausführung 23 in das jeweilige Schutzrohr 5 und durch den jeweiligen Hüllkörper 1 zum jeweiligen Medienverbraucher bzw. -verbraucheranschluss 26.

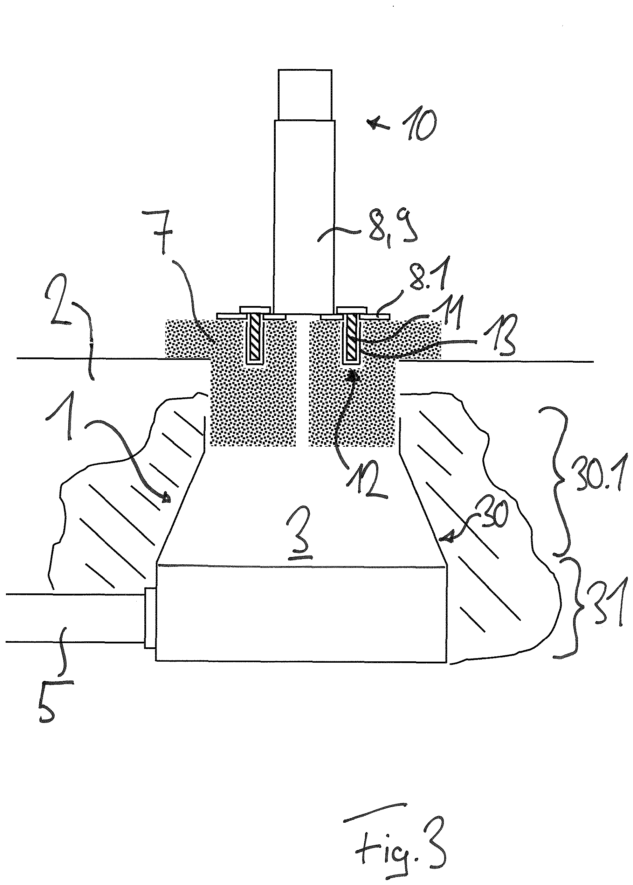

**Figur 3** zeigt analog Figur 1 einen Hüllkörper 1, auf den ein massiver Montageträgers 7 aufgesetzt ist. Dieser ist im Unterschied zu Figur 1 jedoch nicht aus Polymerbeton, sondern aus Polycarbonat gefertigt. Die Vorgehensweise bei der Montage des Befestigungskörpers 8 entspricht jedoch jener in Figur 1, generell bezeichnen im Rahmen der vorliegenden Offenbarung die gleichen Bezugszeichen gleiche Teil bzw. Teile mit der gleichen Funktion und wird insofern immer auch auf die Beschreibung zu den jeweilig anderen Figuren verwiesen. Deshalb werden im Folgenden vertieft nur noch die Unterschiede diskutiert.

Der Hüllkörper 1 gemäß Figur 3 ist auf Grundlage einer Straßenkappe 30 aufgebaut, wobei im gezeigten Beispiel nur deren Unterteil 30.1 verwendet wird, nämlich ein hier nicht gezeigtes Oberteil vollständig durch den Montageträger 7 ersetzt wurde. Bei einer alternativ möglichen Ausführungsform kann das Oberteil auf dem Unterteil 30.1 belassen werden und der Montageträger nur einen Deckel der Straßenkappe ersetzen. Die Straßenkappe 30 bzw. ihr Unterteil 30.1 ist auf einen topfförmigen Grundkörper 31 gesetzt, in den das Schutzrohr 5 im Unterschied zu Figur 1 nicht von unten, sondern seitlich hineinläuft. Es mündet aber wiederum in den Innenraum 3, der zur Leitungs- bzw. Kabelführung etc. zur Verfügung steht.

Im Unterschied zu Figur 1 sitzt der Montageträger 7 nicht in einer vorab fest definierten Position auf dem Hüllkörper 1 auf, sondern kann er bei der Herstellung des Bodens 2 noch ein Stück weit versetzt und dementsprechend bündig in den Boden eingebettet werden. Dies gilt analog, wenn an Stelle des gezeigten Montageträgers 7 das Oberteil der Straßenkappe 30 am Unterteil 30.1 platziert wäre, auch dieses ließe sich bspw. beim Verdichten des Bodens bündig einlassen. Damit kann diese Variante speziell in Wegen oder Einfahrten von Interesse sein.

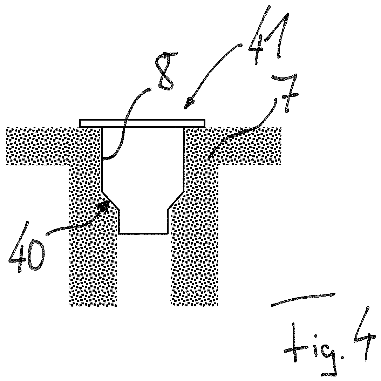

**Figur 4** zeigt einen zu Figur 3 alternativen Montageträger 7, der mit einer Ausnehmung 40 gefasst ist. In diese kann von oben der Befestigungskörper 8 eingesetzt werden, bei dem es sich in diesem Beispiel um ein Gehäuse einer Bodenleuchte 41 handelt.

## Patentansprüche

1. Verwendung einer Gehäusevorrichtung,
die einen Hüllkörper (1), der einen Innenraum (3) begrenzt, und
einen Montageträger (7) aufweist,
bei welcher Verwendung der Hüllkörper außerhalb eines Gebäudes (20) in einen Boden (2) eingebaut ist oder wird,
wobei der Montageträger (7) auf dem Hüllkörper (1) angeordnet ist oder wird,
und wobei an einer Oberseite des Montageträgers (7) ein Befestigungskörper (8) durch Eindrehen einer Schraube (11) an dem Montageträger (7) befestigt wird,
wobei ein Loch (12), in dem die eingedrehte Schraube (11) angeordnet ist, erst vor Ort in den Montageträger (7) eingebracht wird, **dadurch gekennzeichnet, dass**
der Montageträger (7) aus einem Montageträgermaterial vorgesehen ist, welches ein Hartkunststoff ist, und der Montageträger (7) zumindest in einem Montagebereich eine Dicke von mindestens 2 cm und höchstens 20 cm hat,
wobei der Montagebereich horizontal eine Fläche von mindestens 40 cm² und höchstens 1 m² hat.

2. Verwendung nach Anspruch 1, bei welcher das Loch (12) vor Ort durch Bohren in den Montageträger (7) eingebracht wird.

3. Verwendung nach einem der vorstehenden Ansprüche, bei welcher in das Loch (12) in dem Montageträger (7) vor Ort ein Dübel (13) eingesetzt wird.

4. Verwendung nach einem der vorstehenden Ansprüche, bei welcher der Montageträger (7) an dem Hüllkörper (1) befestigt ist oder wird.

5. Verwendung nach einem der vorstehenden Ansprüche, bei welchem ein unterer Abschnitt (1a) des Hüllkörpers (1) mit Beton (2.2) umfüllt ist oder wird.

6. Verwendung nach Anspruch 5, bei welcher der Hüllkörper (1) eine Topfform mit einer Seitenwand (1.1) und einer Bodenwand (1.2) hat, wobei an der Bodenwand (1.2) des Hüllkörpers ein Schutzrohr (5) in den Innenraum (3) des Hüllkörpers (1) mündet, das in dem Boden (2) verlegt ist oder wird.

7. Verwendung nach einem der vorstehenden Ansprüche, bei welcher durch den Hüllkörper (1) eine Medienleitung (6) verlegt wird, wobei mit dem Befestigungskörper (8) ein Medienverbraucher oder Medienverbraucheranschluss (26) an dem Montageträger (7) befestigt wird, an den die Medienleitung (6) angeschlossen ist oder wird.

8. Verwendung nach Anspruch 7, bei welcher die Medienleitung (6) zwischen dem Hüllkörper (1) und einem Gebäude (20) verlegt und in dem Gebäude (20) an ein verbraucherseitiges Ende eines Medienhausanschlusses angeschlossen wird.

9. Verwendung nach einem der vorstehenden Ansprüche, bei welcher in dem Montageträger (7) eine Ausnehmung (40) vorgesehen ist, wobei der Befestigungskörper (8) bei der Montage an dem Montageträger (7) zumindest anteilig in die Ausnehmung (40) eingesetzt wird.

10. Verwendung nach einem der vorstehenden Ansprüche, bei welcher der Befestigungskörper (8) eine Säule (9) bildet oder trägt, die sich von dem Montageträger (7) um mindestens 25 cm weg erhebt.

11. Verfahren zum Montieren eines Befestigungskörpers (8) an einer Gehäusevorrichtung, die einen Hüllkörper (1), der einen Innenraum (8) begrenzt, und einen Montageträger (7) aufweist, der aus einem Montageträgermaterial, welches ein Hartkunststoff ist, vorgesehen ist, gemäß einer Verwendung nach einem der vorstehenden Ansprüche.

## Claims

1. Use of a housing device,
which comprises an enveloping body (1) delimiting an interior (3), and
comprises a mounting support (7),
in which use the enveloping body is or will be installed in a ground (2) outside a building (20),
wherein the mounting support (7) is or will be arranged on the enveloping body (1),
and wherein a fastening body (8) is fastened to the mounting support (7) on an upper side of the mounting support (7) by screwing in a screw (11), wherein a hole (12), in which the screwed-in screw (11) is arranged, is first inserted into the mounting support (7) on site, **characterized in that** the mounting support (7) is provided from a mounting support material which is a hard plastic, and the mounting support (7) has a thickness of at least 2 cm and at most 20 cm at least in a mounting area,
wherein the mounting area horizontally has an area of at least 40 cm² and at most 1 m².

2. Use according to claim 1, in which the hole (12) is formed on site by drilling into the mounting support (7).

3. Use according to any one of the preceding claims, in which a dowel (13) is inserted into the hole (12) in the mounting support (7) on site.

4. Use according to anyone of the preceding claims, in which the mounting support (7) is or becomes attached to the enveloping body (1).

5. Use according to anyone of the preceding claims, wherein concrete (2.2) is or will be filled around a lower section (1a) of the enveloping body (1).

6. Use according to claim 5, in which the enveloping body (1) has a pot shape with a side wall (1.1) and a base wall (1.2), wherein a protective tube (5), which is or will be laid in the ground (2), opens into the interior (3) of the enveloping body (1) at the base wall (1.2) of the enveloping body.

7. Use according to any one of the preceding claims, in which a media line (6) is laid through the enveloping body (1), wherein a media consumer or media consumer connection (26), to which the media line (6) is or will be connected, is fastened to the mounting support (7) by means of the fastening body (8).

8. Use according to claim 7, in which the media line (6) is laid between the enveloping body (1) and a building (20) and is connected in the building (20) to a consumer-side end of a media house connection.

9. Use according to any one of the preceding claims, in which a recess (40) is provided in the mounting support (7), wherein the fastening body (8) is at least partially inserted into the recess (40) during mounting on the mounting support (7).

10. Use according to any one of the preceding claims, in which the fastening body (8) forms or supports a column (9) which extends away from the mounting support (7) by at least 25 cm.

11. A method of mounting a mounting body (8) to a housing device comprising a enveloping body (1) delimiting an interior space (8) and a mounting support (7) provided of a mounting support material which is a hard plastic, according to a use according to any one of the preceding claims.

## Revendications

1. Utilisation d'un dispositif formant boîtier présentant
un corps d'enveloppe (1) délimitant un espace intérieur (3), et
un support de montage (7),
dans le cadre de laquelle utilisation le corps d'enveloppe est préalablement installé dans un sol (2) à l'extérieur d'un bâtiment (20) ou le sera,
le support de montage (7) est préalablement disposé sur le corps d'enveloppe (1) ou le sera,
et un corps de fixation (8) est fixé au support de montage (7) sur un côté supérieur dudit support de montage (7) par application d'une vis (11),
un trou (12) dans lequel est disposée la vis (11) appliquée est réalisé directement sur place dans le support de montage (7) ;
**caractérisée en ce que**
le support de montage (7) est constitué d'un matériau consistant en une matière plastique dure, et le support de montage (7) présente, au moins dans une zone de montage, une épaisseur d'au moins 2 cm et d'au plus 20 cm,
la zone de montage ayant, horizontalement, une superficie d'au moins 40 cm² et d'au plus 1 m².

2. Utilisation selon la revendication 1, dans laquelle le trou (12) est réalisé sur place par perçage du support de montage (7).

3. Utilisation selon l'une des revendications précédentes, dans laquelle une cheville (13) est insérée sur place dans le trou (12) du support de montage (7).

4. Utilisation selon l'une des revendications précédentes, dans laquelle le support de montage (7) est préalablement fixé au corps d'enveloppe (1) ou le sera.

5. Utilisation selon l'une des revendications précédentes, dans laquelle une portion inférieure (1a) du corps d'enveloppe (1) est préalablement remplie de béton (2.2) ou le sera.

6. Utilisation selon la revendication 5, dans laquelle le corps d'enveloppe (1) est en forme de pot et présente une paroi latérale (1.1) et une paroi de fond (1.2) ; un tube de protection (5), posé dans le sol (2) ou destiné à l'être, débouchant dans l'espace intérieur (3) du corps d'enveloppe (1) au niveau de la paroi de fond (1.2) du corps d'enveloppe.

7. Utilisation selon l'une des revendications précédentes, dans laquelle une conduite de réseau (6) est posée à travers le corps d'enveloppe (1), le corps de fixation (8) permettant la fixation, au support de montage (7), d'un consommateur en réseau ou d'un raccord de consommateur en réseau (26) auquel la conduite de réseau (6) est préalablement raccordée ou le sera.

8. Utilisation selon la revendication 7, dans laquelle la conduite de réseau (6) est posée entre le corps d'enveloppe (1) et un bâtiment (20) et est raccordée, dans le bâtiment (20), à une extrémité consommateur d'une connexion domestique de réseau.

9. Utilisation selon l'une des revendications précédentes, dans laquelle un évidement (40) est prévu dans le support de montage (7), le corps de fixation (8) étant au moins partiellement inséré dans l'évidement (40) lors du montage sur le support de montage (7).

10. Utilisation selon l'une des revendications précédentes, dans laquelle le corps de fixation (8) forme ou supporte une colonne (9) qui s'élève du support de montage (7) sur au moins 25 cm.

11. Procédé de montage d'un corps de fixation (8) sur un dispositif formant boîtier présentant un corps d'enveloppe (1) délimitant un espace intérieur (3) et un support de montage (7) constitué d'un matériau consistant en une matière plastique dure, conformément à une utilisation selon l'une des revendications précédentes.
